# EUROPEAN PATENT SPECIFICATION

(11) **EP 2 666 319 B1**
(45) Date of publication and mention of the grant of the patent: **16.11.2016**
(21) Application number: 11770910.5
(22) Date of filing: 01.07.2011
(51) Int. Cl.: H04W 24/10, H04W 64/00

(54) **ENHANCED MEASUREMENT GAP CONFIGURATION SUPPORT FOR POSITIONING RELATED APPLICATIONS**
VERBESSERTE UNTERSTÜTZUNG FÜR DIE MESSLÜCKENKONFIGURATION FÜR POSITIONIERUNGSANWENDUNGEN
PRISE EN CHARGE DE CONFIGURATION D'INTERVALLE DE MESURE AMÉLIORÉE POUR APPLICATIONS LIÉES À LA LOCALISATION

(30) Priority: 19.01.2011 US 201161434248 P
(43) Date of publication of application: 27.11.2013
(73) Proprietor: Telefonaktiebolaget LM Ericsson (publ), 164 83 Stockholm (SE)
(72) Inventor: KAZMI, Muhammad, S-167 39 Bromma (SE); SIOMINA, Iana, S-170 66 Solna (SE)
(74) Representative: Ericsson
(86) International application number: PCT/SE2011/050895
(87) International publication number: WO 2012/099514

(56) References cited:
- US-A1- 2010 317 343
- HUAWEI ET AL: "Remaining issues when UE performs inter-frequency RSTD measurement", 3GPP DRAFT; R4-110177, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Austin; 20110117, 12 January 2011 (2011-01-12), XP050475256,
- ERICSSON ET AL: "measurement gap configuration for inter-freq RSTD measurement", 3GPP DRAFT; R2-106464 INTER-FREQ RSTD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050467156,
- ERICSSON ET AL: "Inter-frequency measurements for OTDOA positioning", 3GPP DRAFT; R4-100874 INTER-FREQUENCY MEASUREMENTS FOR OTDOA POSITIONING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. San Francisco, USA; 20100222, 1 March 2010 (2010-03-01), XP050426280,

## Description

### RELATED APPLICATIONS

### TECHNICAL FIELD

The present invention generally relates to wireless communications systems, and more particularly relates to systems in which wireless devices perform positioning measurements on one or more non-serving cell frequencies.

### BACKGROUND

The ability to identify the geographic position of a user equipment (UE) in a wireless communications system has enable and/or enhanced a large variety of commercial and non-commercial services, e.g., navigation assistance, social networking, location-aware adverting, emergency calls, etc. Different services may have different positioning accuracy requirements. In addition, some regulatory requirements on the positioning accuracy for basic emergency services exist in some countries, e.g., in the United States, where the Federal Communications Commission imposes regulatory requirements for Enhanced-911 services.

In many environments, the position of a UE can be accurately estimated by using positioning methods based on GPS (Global Positioning System). However, GPS is known to often fail in indoor environments and urban canyons. In these and other situations, the wireless communication system itself can assist the UE to determine its position with GPS. This approach is commonly referred to as Assisted-GPS positioning, or simply A-GPS, and serves to improve the UE receiver sensitivity and GPS start-up performance. Despite the possibility of this assistance, GPS and A-GPS still prove insufficient under some circumstance. Indeed, some UE's may not even be capable of using GPS or A-GPS.

A complementary terrestrial positioning method, called Observed Time Difference of Arrival (OTDOA), has therefore been standardized by the 3^{rd} Generation Partnership Project (3GPP). In addition to OTDOA, the Long Term Evolution (LTE) standard also specifies methods, procedures, and signalling support for Enhanced Cell ID (E-CID) and Assisted Global Navigation Satellite System (A-GNSS). Uplink Time Difference of Arrival (UTDOA) is also being standardized for LTE.

### Positioning in LTE

The three key network elements in an LTE positioning architecture are the Location Services (LCS) Client, the LCS target device (i.e., the UE), and the LCS Server. The LCS Server estimates the position of the LCS target device. Specifically, the LCS Server is a physical or logical entity that manages positioning for the LCS target device by collecting measurements and other location information, that assists the LCS target device in measurements when necessary, and that estimates the LCS target device's position. The LCS Client may or may not reside in the LCS target device itself. Regardless, the LCS Client is a software and/or hardware entity that interacts with the LCS Server for the purpose of obtaining location information for the LCS target device. Specifically, the LCS Client sends a request to the LCS Server to obtain location information. The LCS Server processes and serves the received requests, and then sends the positioning result and optionally a velocity estimate to the LCS Client. A positioning request can be originated from the LCS target device or the network.

Position calculation can be conducted, for example, by a UE or by a positioning server, such as an Evolved Serving Mobile Location Center (E-SMLC) or Secure User Plan Location (SUPL) Location Platform (SLP) in LTE. The former approach corresponds to the UE-based positioning mode, whilst the latter corresponds to the UE-assisted positioning mode.

Two positioning protocols operating via the radio network exist in LTE, LTE Positioning Protocol (LPP) and LPP Annex (LPPa). The LPP is a point-to-point protocol between an LCS Server and an LCS target device, and is used in order to position the LCS target device. LPP can be used both in the user and control plane, and multiple LPP procedures are allowed in series and/or in parallel in order to reduce latency. LPPa is a protocol between an eNodeB and the LCS Server specified only for control-plane positioning procedures, although it still can assist user-plane positioning by querying eNodeBs for information and eNodeB measurements. SUPL protocol is used as a transport for LPP in the user plane. LPP has also a possibility to convey LPP extension messages inside LPP messages, e.g. currently Open Mobiel Alliance (OMA) LPP extensions are being specified (LPPe) to allow e.g. for operator-specific assistance data, assistance data that cannot be provided with LPP, or to support other position reporting formats or new positioning methods.

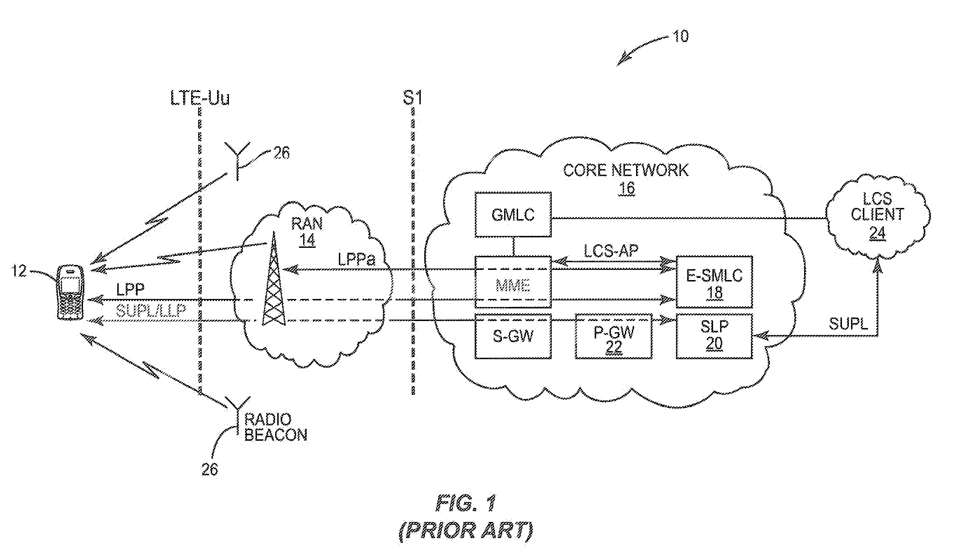

A high-level architecture of such an LTE system 10 is illustrated in Figure 1. In Figure 1, the system 10 includes a UE 12, a radio access network (RAN) 14, and a core network 16. The UE 12 comprises the LCS target. The core network 16 includes an E-SMLC 18 and/or an SLP 20, either of which may comprise the LCS Server. The control plane positioning protocols with the E-SMLC 14 as the terminating point include LPP, LPPa, and LCS-AP. The user plane positioning protocols with the SLP 16 as the terminating point include SUPL/LPP and SUPL. Although note shown, the SLP 20 may comprise two components, a SUPL Positioning Center (SPC) and a SUPL Location Center (SLC), which may also reside in different nodes, in an example implementation, the SPC has a proprietary interface with E-SMLC, and an LIp interface with the SLC. The SLC part of the SLP communicates with a P-GW (PDN-Gateway) 22 and an External LCS Client 24.

Additional positioning architecture elements may also be deployed to further enhance performance of specific positioning methods. For example, deploying radio beacons 26 is a cost-efficient solution which may significantly improve positioning performance indoors and also outdoors by allowing more accurate positioning, for example, with proximity location techniques.

### Positioning methods

To meet Location Based Service (LBS) demands, the LTE network will deploy a range of complementing methods characterized by different performance in different environments. Depending on where the measurements are conducted and where the final position is calculated, the methods can be UE-based, UE-assisted, or network-based. Each of these approaches has its own advantages and disadvantages. The following methods are available in the LTE standard for both the control plane and the user plane: (1) Cell ID (CID), (2) UE-assisted and network-based E-CID, including network-based angle of arrival (AoA), (3) UE-based and UE-assisted A-GNSS (including A-GPS), and (4) UE-assisted OTDOA.

Hybrid positioning, fingerprinting positioning and adaptive E-CID (AECID) do not require additional standardization and are therefore also possible with LTE. Furthermore, there may also be UE-based versions of the methods above, e.g. UE-based GNSS (e.g. GPS) or UE-based OTDOA, etc. There may also be some alternative positioning methods such as proximity based location.

Similar methods, which may have different names, also exist in other RATs, e.g. WCDMA or GSM.

### E-CID Positioning

E-CID positioning exploits the advantages of low-complexity and fast positioning associated with CID, but enhances positioning further with more measurement types. Specifically, CID exploits the network's knowledge of geographical areas associated with cell IDs. E-CID additionally exploits the corresponding geographical description of the serving cell, the Timing Advance (TA) of the serving cell, and the CIDs and the corresponding signal measurements of the cells (up to 32 cells in LTE, including the serving cell), as well as AoA measurements. The following UE measurements can be utilized for E-CID in LTE: E-UTRAN carrier Received Signal Strength Indicator (RSSI), Reference Signal Received Power (RSRP), Reference Signal Received Quality (RSRQ), and UE Rx-Tx time difference. The E-UTRAN measurements available for E-CID are eNodeB Rx-Tx time difference (also called TA Type 2), TA Type 1 being (eNodeB Rx-Tx time difference) + (UE Rx-Tx time difference), and UL AoA, UE Rx-Tx measurements are typically used for the serving cell, whilst e.g. RSRP and RSRQ as well AoA can be utilized for any cell and can also be conducted on a frequency different from that of the serving cell.

The UE's E-CID measurements are reported by the UE to the positioning server (e.g. E-SMLC or SLP) over LPP, and the E-UTRAN E-CID measurements are reported by the eNodeB to the positioning node over LPPa. The UE may receive assistance data from the network e.g. via LPPe (no LPP assistance for E-CID is currently specified in the standard, however, it may be sent via LPP extension protocol, LPPe).

### OTDOA positioning

The OTDOA positioning method makes use of the measured timing of downlink signals received from multiple eNodeBs at the UE. The UE measures the timing of the received signals using assistance data received from the LCS server, and the resulting measurements are used to locate the UE in relation to the neighboring eNodeBs.

With OTDOA, a terminal measures the timing differences for downlink reference signals received from multiple distinct locations. For each (measured) neighbor cell, the UE measures Reference Signal Time Difference (RSTD) which is the relative timing difference between neighbor cell and the reference cell. The UE position estimate is then found as the intersection of hyperbolas corresponding to the measured RSTDs. At least three measurements from geographically dispersed base stations with a good geometry are needed to solve for two coordinates of the terminal and the receiver clock bias. In order to solve for position, precise knowledge of the transmitter locations and transmit timing offset is needed.

To enable positioning in LTE, and to facilitate positioning measurements of a proper quality and for a sufficient number of distinct locations, new physical signals dedicated for positioning have been introduced. 3GPP TS 36.211. These new signals are called positioning reference signals (PRS). Also, low-interference positioning subframes have been specified.

PRS are transmitted from one antenna port (R6) according to a pre-defined pattern. 3GPP TS 36.211. A frequency shift, which is a function of Physical Cell Identity (PCI), can be applied to the specified PRS patterns to generate orthogonal patterns and modelling the effective frequency reuse of six. This makes it possible to significantly reduce neighbour cell interference on the measured PRS and thus improve positioning measurements.

### Assistance data for positioning

Assistance data is intended to assist a wireless device or a radio node in its positioning measurements. Different sets of assistance data are typically used for different methods. The positioning assistance data is typically sent by the positioning server, although it may be sent via other nodes. For example, assistance data may be sent to an eNodeB for being further sent to the UE, e.g. transparently to eNodeB and also Mobility Management Entity (MME). The assistance data may also be sent by the eNodeB via LPPa to positioning server for further transfer to the UE.

The assistance data may be sent responsive to a request from the wireless device that will perform measurements. Alternatively, the assistance data may be sent in an unsolicited way; that is, without request.

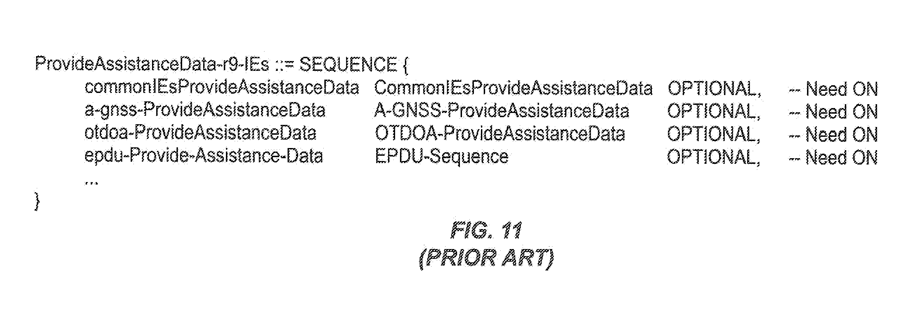

In LTE, the assistance data may be requested and provided over LPP protocol by including *requestAssistanceData* and *provideAssistanceData* elements in the LPP message, respectively. The current LTE standard specifies the structure shown in Figure 11 for *provideAssistanceData*. In this structure, the *common*/*EsProvideAssistanceData* IE is provided for future extensibility only, and is thus not currently used. The LTE assistance data may thus be provided for A-GNSS and OTDOA, The *EPDU-Sequence* contains IEs that are defined externally to LPP by other organizations, which currently may only be used for OMA LPP extensions (LPPe).

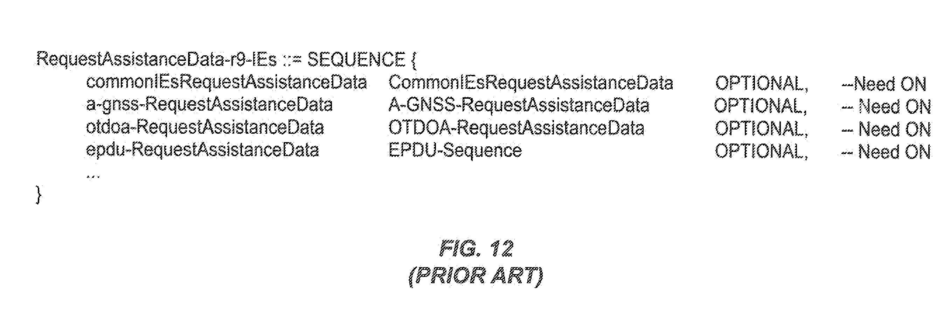

A similar structure exists for *requestAssisianceData*, and is shown in Figure 12. In Figure 12, *common*/*EsRequestAssistanceData* may optionally carry the serving cell ID (ECGI).

### OTDOA assistance data

Since for OTDOA positioning PRS signals from multiple distinct locations need to be measured, the UE receiver may have to deal with PRS that are much weaker than those received from the serving cell. Furthermore, without the approximate knowledge of when the measured signals are expected to arrive in time and what is the exact PRS pattern, the UE would need to do signal search within a large window. Such a search would impact the time and accuracy of the measurements, as well as the UE complexity. To facilitate UE measurements, the network transmits assistance data to the UE, which includes, among others things, reference cell information, a neighbour cell list containing PCls of neighbour cells, the number of consecutive downlink subframes, PRS transmission bandwidth, frequency, etc.

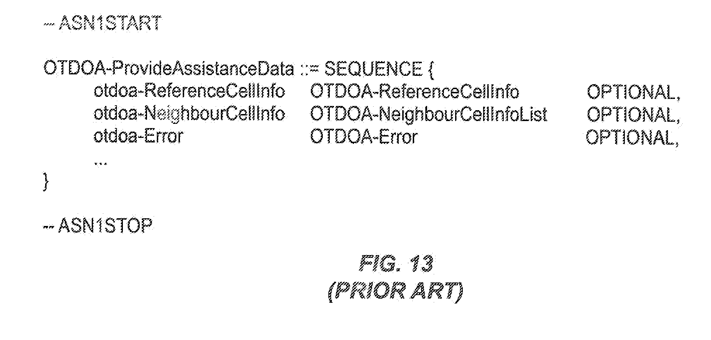

For OTDOA, the assistance data is provided with IE *OTDOA-ProvideAssistanceData* which comprises the information about the reference cell (one cell in the list) and neighbor cells information (multiple cells). This IE is shown in Figure 13.

The neighbour cells may or may not be on the same frequency as the reference cell, and the reference cell may or may not be on the same frequency as the serving cell. Measurements that involve cells on a frequency different than the serving cell are inter-frequency measurements. Measurements on the same frequency as the serving cell are intra-frequency measurements. Different requirements apply for intra- and inter-frequency measurements.

The current standard only allows including E-UTRA cells in the assistance data. However, the cells may still belong to FDD and TDD which are treated as different RATs.

### E-CID assistance data

Assistance data delivery is not required for UE- or eNodeB-assisted forms of E-CID positioning. In fact, this is not currently supported without EPDU elements. Also, UE-based E-CID location is not currently supported either, and the assistance data delivery procedure is not applicable to uplink E-CID positioning. No assistance data is currently specified for E-CID for LPP. Some assistance data, however, may be provided for E-CID e.g. via LPPe.

### Assistance data extensions with OMA

With Open Mobile Alliance (OMA) LPP extension (LPPe), the assistance data is enhanced with the possibility to assist a larger range of positioning methods (e.g. assistance data may also be provided for E-CID or other methods of other RATs, e.g. OTDOA UTRA or E-OTD GSM, or other PLMN networks). Furthermore, there is also a possibility of carrying over a black-box data container meant for carrying vendor-/operator-specific assistance data.

### Inter-frequency, inter-band and inter-RAT measurements

It is mandatory for all UEs to support all intra-RAT measurements (i.e. inter-frequency and intra-band measurements) and meet the associated requirements. However the inter-band and inter-RAT measurements are UE capabilities, which are reported to the network during call setup. The UE supporting certain inter-RAT measurements should meet the corresponding requirements. For example a UE supporting LTE and WCDMA should support intra-LTE measurements, intra-WCDMA measurements and inter-RAT measurements (i.e. measuring WCDMA when the serving cell is LTE and measuring LTE when the serving cell is WCDMA). Hence the network can use these capabilities according to its strategy. These capabilities are highly driven by factors such as market demand, cost, typical network deployment scenarios, frequency allocation, etc.

### Inter-frequency measurements

Inter-frequency measurements may in principle be considered for any positioning method, even though currently not all measurements are specified by the standard as intra- and inter-frequency measurements. When performing inter-frequency measurement, the serving and target carrier frequencies may belong to the same duplex mode or to different duplex modes e.g. LTE FDD-FDD inter-frequency, LTE TDD-TDD inter-frequency, LTE FDD-TDD inter-frequency or LTE TDD-FDD inter-frequency scenario. The FDD carrier may operate in full duplex or even in half duplex mode. The examples of inter-frequency measurements currently specified by the standard are Reference Signal Time Difference (RSTD) used for OTDOA, RSRP and RSRQ which may be used e.g. for fingerprinting or E-CID.

The UE performs inter-frequency and inter-RAT measurements in measurement gaps. The measurements may be done for various purposes: mobility, positioning, self organizing network (SON), minimization of drive tests etc. Furthermore the same gap pattern is used for all types of inter-frequency and inter-RAT measurements. Therefore E-UTRAN must provide a single measurement gap pattern with constant gap duration for concurrent monitoring (i.e. cell detection and measurements) of all frequency layers and RATs.

In LTE, measurement gaps are configured by the network to enable measurements on the other LTE frequencies and/or other RATs (e.g. UTRA, GSM, CDMA2000, etc). The gap configuration is signaled to the UE from the serving cell radio node over the Radio Resource Control (RRC) protocol as part of the measurement configuration. A UE that requires measurement gaps for positioning measurements, e.g., OTDOA, may send an indication to the network, e.g. eNodeB, upon which the network may configure the measurement gaps. Furthermore, the measurement gaps may need to be configured according to a certain rule, e.g. inter-frequency RSTD measurements for OTDOA require that the measurement gaps are configured according to the inter-frequency requirements in 36.133, Section 8.1.2.6, e.g. not overlapping with PRS occasions of the serving cell and using gap pattern #0.

In a carrier aggregation system, there may be multiple serving cells. In this case, a set of serving cells for a UE in a carrier aggregation mode comprises one primary cell and one or more configured secondary cells. A carrier aggregation capable UE generally does not require measurement gaps for performing measurements on configured and activated primary and secondary cells. However, there may be cells in the system that are not configured or not activated as serving cells for the UE, e.g., for one of the following reasons: the UE may be capable of supporting only a limited number of serving cells and/or some cells may be deactivated for carrier aggregation or not configured as secondary cells. For performing measurements on these cells, the UE would normally still require measurement gaps.

### Inter-RAT measurements

In general, in LTE inter-RAT measurements are typically defined similar to inter-frequency measurements. That is, inter-RAT measurements may also require configuring measurement gaps, but just with more measurement restrictions and often more relaxed requirements. As a special example there may also be multiple networks, which use overlapping sets of RATs. The examples of inter-RAT measurements specified currently for LTE are UTRA FDD CPICH RSCP, UTRA FDD carrier RSSI, UTRA FDD CPICH Ec/No, GSM carrier RSSI, and CDMA2000 1 x RTT Pilot Strength.

For positioning, assuming that LTE FDD and LTE TDD are treated as different RATs, the current standard defines inter-RAT requirements only for FDD-TDD and TDD-FDD measurements, and the requirements are different in the two cases. There are no other inter-RAT measurements specified within any separate RAT for the purpose of positioning and which are possible to report to the positioning node (e.g. E-SMLC in LTE).

### Inter-band measurements

Inter-band measurement refers to the measurement done by the UE on a target cell on the carrier frequency belonging to a frequency band different than that of the serving cell. Both inter-frequency and inter-RAT measurements can be intra-band or inter-band.

The motivation of inter-band measurements is that most of the UEs today support multiple bands even for the same technology, This is driven by the interest from service providers; a single service provider may own carriers in different bands and would like to make efficient use of carriers by performing load balancing on different carriers. A well known example is that of multi-band GSM terminal with 800/900/1800/1900 bands. Another example is when a DL band has no paired UL within the same band and thus has to be paired with UL from another frequency band.

Furthermore a UE may also support multiple technologies e.g. GSM, UTRA FDD and E-UTRAN FDD. Since all UTRA and E-UTRA bands are common, therefore the multi-RAT UE may support same bands for all the supported RATs.

### Inter-frequency requirements for positioning-related timing measurements

No inter-frequency requirements are currently defined for UE or eNodeB Rx-Tx measurements. For OTDOA, the current standard defines inter-frequency requirements for RSTD measurements assuming the following two scenarios, 3GPP TS 36.133. In the first scenario, the reference cell and all neighbor cells provided in the assistance data operate on the same frequency f2, which is different from the serving cell frequency f1. In the second scenario, the reference cell is on the serving cell frequency f1, whilst all neighbor cells provided in the assistance data are on frequency f2, which is different from the serving cell f1. The requirements are generic with respect to the frequency channels and frequency bands, i.e. the requirements are the same for any two different f1 and f2, independently on their absolute and relative location in the spectrum. In real deployments there may also be intermediate scenarios between the first scenario and the second scenario. Further, although the requirements are only defined for two frequencies, the signalling specified for OTDOA positioning supports up to three frequencies that may be different from the reference cell frequency, which in turn may also be different from the serving/primary cell frequency.

US 2010/0317343 A1 discloses a wireless terminal that receives signaling information, pertaining to a reference signal transmission in at least one specifically designated sub frame, the signaling information including a list, the list including base station identities. The terminal determines, from at least one of the base station identities in the list, the time-frequency resources associated with a reference signal transmission intended for observed time difference of arrival (OTDOA) measurements from a transmitting base station associated with said one base station identity. The time of arrival of a transmission from the transmitting base station, relative to reference timing, is measured. The wireless terminal can receive a command from a serving cell to start performing inter-frequency OTDOA measurement on a frequency layer containing reference signals, the frequency layer distinct from the serving frequency layer, the serving frequency layer not containing positioning reference signals. The wireless terminal can perform OTDOA measurements subsequent to the reception of the command on a carrier frequency different from the serving cell carrier frequency. A base station transmitter can jointly schedule a reference signal transmission from a plurality of base station transmitters for the purpose of OTD estimation enhancement, and transmit identical reference signals from the plurality of base station transmitters, the reference signals being identical both in the signal sequence and time-frequency resources used for transmission.

### Problems with existing solutions

At least the following problems have been identified with the prior art solutions.

An eNodeB is heretofore unable to properly configure measurement gaps for a UE performing inter-frequency RSTD measurements. Indeed, the eNodeB is not even aware of the frequency or cell IDs on which the measurements are to be performed and thus is not be able e.g. to align PRS positioning occasions with measurement gaps. The consequence is that the measurement gaps are incorrectly configured, or do not provide sufficiently many or a required number of subframes with PRS for positioning measurements. This means that the UE measurements may fail or the measurement requirements may not be met.

Furthermore, there is currently no way to configure and use measurement gaps for inter-RAT positioning, for the measurements requested via assistance data received using LPPe or the user plane, or for non PRS-based measurements (which may or may not be performed according to a pattern, e.g., a restricted measurement pattern configured with enhanced inter-cell interference coordination (eICIC)).

### SUMMARY

The present invention includes a method implemented by a base station according to claim 1, a method implemented by a wireless device according to claim 7, a base station according to claim 10, and a wireless device according to claim 11.

A base station taught herein configures one or more measurement gaps during which a wireless device is to perform one or more positioning measurements on one or more non-serving frequencies. The base station advantageously configures the one or more measurement gaps based on information obtained regarding the one or more non-serving frequencies on which the positioning measurements will be performed. By configuring the measurement gaps in this way, the base station is able to intelligently align the configured measurement gaps with the occurrence of positioning reference signals from neighboring cells. So aligned, the device's positioning measurements prove more reliable and accurate than in prior approaches. Indeed, in some cases, positioning measurements in prior approaches may completely fail, while those herein would not.

In more detail, a base station herein is configured to serve a wireless device in a serving cell on a serving frequency. The base station obtains information that indicates one or more non-serving frequencies on which the wireless device is to perform one or more positioning measurements. These positioning measurements are to be used by, e.g., the device itself or another node in the system, for determining the wireless device's geographic position. For at least one non-serving frequency indicated by the obtained information, the base station configures a measurement gap during which the wireless device is to perform a corresponding positioning measurement. Specifically, the base station configures such measurement gap to occur during a period of time in which a neighboring cell transmits a positioning reference signal over that non-serving frequency. A positioning reference signal as used herein is specifically designed (e.g., with good signal quality) to be a signal on which a wireless device performs positioning measurements. Thus, by aligning the measurement gap with the transmission of a positioning reference signal, the positioning measurements will be more likely to succeed and will be of better quality.

In at least some embodiments, the information obtained by the base station only indicates the one or more non-serving frequencies on which the wireless device is to perform the one or more positioning measurements. In other embodiments, the information also identifies at least one neighboring cell on which the wireless device is to perform the one or more positioning measurements. In this case, a cell may be identified by cell-specific information, such as a cell identifier. In still other embodiments, the information also actually indicates the periods of time during which one or more neighboring cells will transmit respective signals intended for positioning measurements on the indicated non-serving frequencies.

In at least one embodiment, the base station obtains the information from a database in the base station's memory. In other embodiments, the base station obtains the information from a network node in the wireless communication system, e.g., a positioning node, an O&M node, or a SON node. In still other embodiments, the base station obtains the information from the wireless device itself. In further embodiments, the base station obtains the information by inspecting higher layer communications transmitted between the positioning node and the wireless device.

Regardless of the particular information indicated in addition to the non-serving frequencies or the particular way in which the base station obtains the information, in some embodiments the base station is somewhat restricted in the sense that it must configure the measurement gaps according to one or more pre-defined rules. For example, in one embodiment, the base station must configure the measurement gaps so that none of them occur during a period of time in which the device's serving cell transmits its own positioning reference signal.

Particularly when the base station is restricted in this way, the base station may not always be able to configure a measurement gap to occur during a period of time in which a neighboring cell transmits a positioning reference signal. Thus, the base station may advantageously configure a measurement gap so that a measurement can be performed on another type of signal. That is, for at least one non-serving frequency indicated by the obtained information, the base station may configure a measurement gap to occur during a period of time in which a neighboring cell transmits a signal other than a positioning reference signal over that non-serving frequency. While the base station may unconditionally configure a measurement gap with respect to a non-positioning reference signal in this way, the base station in at least some embodiments does so only to the extent that configuring a measurement gap with respect to a positioning reference signal is not possible.

Embodiments herein also include a wireless device and network node configured in accordance with the above, as well as corresponding methods.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 is a block diagram of an LTE system configured to determine the geographic position of a user equipment.
Figure 2 is a block diagram of a wireless communication system that includes a base station, wireless device, and network node configured according to one or more embodiments.
Figure 3 is a block diagram of a base station configured according to one or more embodiments.
Figure 4 depicts cross-layer inspection performed by a base station according to one or more embodiments.
Figure 5 is a block diagram of a wireless device configured according to one or more embodiments.
Figure 6 is a block diagram of a network node configured according to one or more embodiments.
Figure 7 is a logic flow diagram of a method implemented by a base station according to one or more embodiments.
Figure 8 is a logic flow diagram of a method implemented by a wireless device according to one or more embodiments.
Figure 9 is a logic flow diagram of a method implemented by a network node according to one or more embodiments.
Figure 10 is a logic flow diagram of a method implemented by a network node according to one or more other embodiments.
Figure 11 illustrates a data structure for the *provideAssistanceData* element specified by prior art LTE standards.
Figure 12 illustrates a data structure for the *requestAssistanceData* element specified by prior art LTE standards.
Figure 13 illustrates a data structure for the *OTDOA-ProvideAssistanceData* element specified by prior art LTE standards.
Figure 14 illustrates a data structure for the *prs-SubframeOffset* element proposed for LTE standards according to one or more embodiments.
Figure 15 illustrates a data structure for the UL-DCCH-Message proposed for LTE standards according to one or more embodiments.
Figure 16 illustrates a data structure for the InterFreqRSTDMeasurementIndication-r10 element proposed for LTE standards according to one or more embodiments.

### DETAILED DESCRIPTION

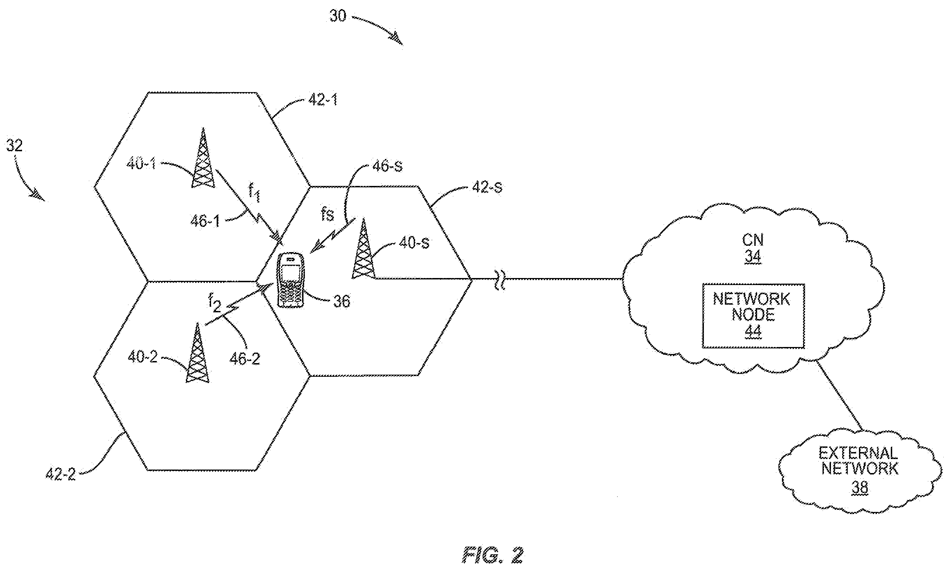

Figure 2 depicts a simplified example of wireless communication system 30 according to one or more embodiments. As shown, the system 30 includes a Radio Access Network (RAN) 32, a Core Network (CN) 34, and one or more wireless devices 36. The RAN 32 and CN 36 enable a wireless device 36 to access one or more external networks 38, such as the Public Switched Telephone Network (PSTN) or the Internet.

The RAN 32 includes a number of base stations 40 that are geographically distributed across the wide geographic area served by the system 30. Each base station 40 provides radio coverage for one or more respective portions of that geographic area, referred to as cells 42. As shown, for example, base station 40-1 serves wireless devices 36 within cell 42-1, base station 40-2 serves wireless devices 36 within cell 42-2, and so on. Because of this, a wireless device 36 may move within or between cells 42 and may communicate with one or more base stations 40 at any given position.

In this regard, Figure 2 depicts a particular wireless device 36 that, at its current position, is served by base station 40-s. Thus, from the perspective of this wireless device 36, base station 40-s is the serving base station and cell 42-s is the serving cell. The other cells 42-1 and 42-2 physically neighbor the serving cell 42-s in the sense that they are geographically adjacent to the serving cell 42-s, These cells 42-1 and 42-2 are thus appropriately referred to as neighboring cells.

Each of the cells 42 (via its base station 40) periodically transmits a so-called positioning reference signal 46. A positioning reference signal 46 as used herein is specifically designed (e.g., with good signal quality) to be a signal on which a wireless device performs positioning measurements. These positioning measurements are to be used by the terminal itself, or some other network node 44 in the core network 35 (e.g., a positioning node), for determining the device's geographic position, In some embodiments, for example, such positioning measurements comprise timing measurements. In such a case, a wireless device may measure timing differences (e.g., RSTD, Rx-Tx, or TA) between different positioning reference signals 46 received from different cells 42. These timing differences are then used to estimate the device's position with respect to the different cells 42.

Regardless of the particular type of positioning measurements performed on the positioning reference signals 46, at least some of the cells 42 transmit those signals on different frequencies. As shown, for example, the serving cell 42-s transmits its positioning reference signal 46-s on a serving frequency fₛ, while each of the neighboring cells 42-1 and 42-2 transmits its positioning reference signal 46-1, 46-2 on a respective non-serving frequency f₁, f₂. In at least some embodiments, these non-serving frequencies f₁ and f₂ are not the same, i.e., f₁ ≠ f₂. In this case, the positioning measurements may be performed on one or more non-serving frequencies f₁, f₂ selected from at least two different possible non-serving frequencies f₁, f₂.

The wireless device 36 performs positioning measurements on non-serving frequencies f₁, f₂ during so-called measurement gaps, A measurement gap as used herein refers to a period of time in which the wireless device 36 performs a measurement on a non-serving frequency, and does not transmit any data or otherwise communicate with the serving cell or other cell on the serving-cell frequency.

To this end, the serving base station 40-s configures (i.e., times or otherwise schedules) one or more measurement gaps during which the wireless device 36 is to perform one or more positioning measurements on one or more non-serving frequencies f₁, f₂. Notably, the base station 40-s does so intelligently, based on information obtained regarding the one or more non-serving frequencies f₁, f₂ (also referred to below as "non-serving frequency information" or "enhanced measurement gap-related information, EMGRI).

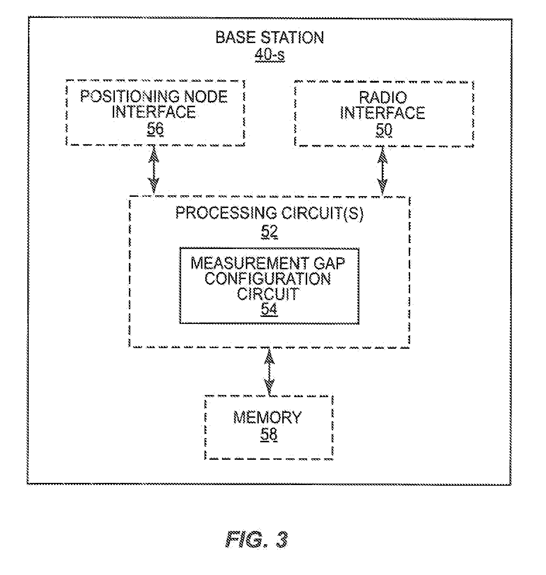

Figure 3 illustrates additional details of the serving base station 40-s in this regard. As shown in Figure 3, the base station 40-s includes a radio interface 50 and one or more processing circuits 52. The radio interface 50 is configured to wirelessly communicate with the wireless device 36 over radio resources. The one or more processing circuits 52 include a measurement gap configuration circuit 54.

The measurement gap configuration circuit 54 is configured to obtain the above mentioned information regarding the one or more non-serving frequencies f₁, f₂. This information more particularly indicates one or more non-serving frequencies f₁, f₂ on which the wireless device 36 is to perform one or more positioning measurements that are to be used for determining the wireless device's geographic position. For at least one non-serving frequency f₁, f₂ indicated by the information, the measurement gap configuration circuit 54 configures a measurement gap during which the wireless device 36 is to perform a corresponding positioning measurement. Specifically, the measurement gap configuration circuit 54 configures such measurement gap to occur during a period of time in which a neighboring cell 42-1, 42-2 transmits a positioning reference signal 46-1, 46-2 over that non-serving frequency f1, f₂. In this way, the measurement gap configuration circuit 54 intelligently aligns the configured measurement gaps with the occurrence of positioning reference signals from neighboring cells 42-1, 42-2. So aligned, the device's positioning measurements prove more reliable and accurate.

In at least some embodiments, the information obtained by the measurement gap configuration circuit 54 only indicates the one or more non-serving frequencies f₁, f₂ on which the wireless device 36 is to perform the one or more positioning measurements. In such case, the base station 40-s is pre-configured with neighbor cell information that indicates which cells 42 neighbor the serving cell 42-s, which frequencies those neighboring cells 42 use, and the periods of time during which those neighboring cells 42 transmit positioning reference signals 46. When the measurement gap configuration circuit 54 obtains information about the non-serving frequencies f₁, f₂ on which the positioning measurements are to be performed, it determines, estimates, or otherwise derives from the neighbor cell information the periods of time during which positioning reference signals 46 will be transmitted by neighboring cells 42 over the indicated non-serving frequencies f₁, f₂. The measurement gap configuration circuit 54 then configures measurement gaps to occur during those periods of time.

Of course, the information obtained by the measurement gap configuration circuit 54 may also indicate some or all of such neighbor cell information as it relates to the positioning measurements. In some embodiments, for instance, the information also identifies at least one neighboring cell 42-1, 42-2 on which the wireless device 36 is to perform the one or more positioning measurements. That is, unlike embodiments where only the non-serving frequencies f₁, f₂ are indicated, the information actually distinguishes the neighboring cell(s) 42 on which the measurements will be performed. So distinguished, the information more particularly assists the measurement gap configuration circuit 54 determine the periods of time during which positioning reference signals 46 will be transmitted over the indicated non-serving frequencies f₁, f₂.

Note that, in at least some embodiments, neighboring cells 42 that transmit positioning reference signals 46 over the same non-serving frequency transmit those signals 46 during the same period of time. In this case, the information obtained by the measurement gap configuration circuit 54 may only identify a single neighboring cell 42 for each non-serving frequency on which the device 36 will perform a positioning measurement, even if more than one neighboring cell 42 will actually transmit a positioning reference signal 46 on that non-serving frequency. A single cell identity suffices because, in these embodiments, once the measurement gap configuration circuit 54 configures a measurement gap for performing a positioning measurement, the wireless device 36 will perform a positioning measurement on each different positioning reference signal 46 transmitted during the measurement gap.

In other embodiments, the information obtained by the measurement gap configuration circuit 54 also actually indicates the periods of time during which one or more neighboring cells 42-1, 42-2 will transmit respective positioning reference signals 46-1, 46-2 on the indicated non-serving frequencies f₁, f₂. For example, in at least one embodiment, the information indicates the period of time during which any given neighboring cell 42-1, 42-2 transmits its positioning reference signal 46-1, 46-2 as an offset from the period of time during which the serving cell 42-s transmits its positioning reference signal 46-s. As explained in more detail below, such an offset may be a subframe offset.

Of course, the offset may be indicated by other methods as well. As another example, the offset may be indicated with respect to the period of time during which a so-called reference cell 42 (not indicated) transmits its positioning reference signal 46. The reference cell 42 may be any of the neighboring cells 42-1, 42-2, or even the serving cell 42-s. Regardless, positioning measurements performed on the positioning reference signal 46 transmitted by such a reference cell 42 serve as a reference for positioning measurements performed on positioning reference signals 46 transmitted by other cells 42.

In at least one other embodiment, the information indicates the period of time during which any given neighboring cell 42-1, 42-2 transmits its positioning reference signal 46-1, 46-2 by indicating that the neighbouring cell 42-1, 42-2 employs one of a plurality of different pre-defined positioning reference signal configurations. These different positioning reference signal configurations specify different periodicities and different timing offsets at which positioning reference signals are transmitted from a cell 42, and may be identified with different configuration indices. In the LTE context, explained in more detail below, such a configuration index may comprise a PRS configuration as defined in 3GPP TS 36.211.

Regardless of the particular information indicated in addition to the non-serving frequencies f₁, f₂, in some embodiments the measurement gap configuration circuit 54 is somewhat restricted in the sense that it must configure the measurement gaps according to one or more pre-defined rules. For example, in one embodiment, the measurement gap configuration circuit 54 must configure the measurement gaps so none of them occur during a period of time in which the device's serving cell 42-s transmits its own positioning reference signal 46-s. Alternatively or additionally, the measurement gap configuration circuit 54 must configure the measurement gaps using a particular gap pattern. Such pre-defined rules may ensure that the device 36 can perform a positioning measurement on the serving frequency fₛ, without that measurement conflicting with other positioning measurements performed on non-serving frequencies f₁, f₂.

Particularly when the measurement gap configuration circuit 54 is restricted by such rules, and perhaps for other reasons, the circuit 34 may not always be able to configure a measurement gap for performing a positioning measurement on a particular non-serving frequency to occur during a period of time in which a neighboring cell 42 transmits a positioning reference signal 46. As noted above, this is unfortunate because measurements performed on positioning reference signals prove more reliable and accurate than measurements performed on other signals. Nonetheless, the measurement gap configuration circuit 54 may advantageously configure a measurement gap so that a measurement can be performed on another type of signal. That is, for at least one non-serving frequency indicated by the obtained information, the circuit 24 may configure a measurement gap during which the wireless device 36 is to perform a positioning measurement to occur during a period of time in which a neighboring cell transmits a signal other than a positioning reference signal 46 over that non-serving frequency.

Note that, in some embodiments, the measurement gap configuration circuit 54 unconditionally configures a measurement gap during which the wireless device 36 is to perform a positioning measurement to occur during a period of time in which a neighboring cell transmits a signal other than a positioning reference signal 46 over a non-serving frequency. In other embodiments, though, the measurement gap configuration circuit 54 does so only if the measurement gap cannot be configured to occur during a period of time in which the neighboring cell transmits a positioning reference signal 46 over that non-serving frequency.

There are a number of different types of signals that may suit for performing positioning measurements on, in case the measurements cannot be performed on positioning reference signals. One type includes cell-specific reference signals (CRS). Other types include terminal-specific reference signals, synchronization signals, pilot signals, or the like. These signals may advantageously be transmitted more often, and may therefore be more available, than positioning reference signals. However, the signals may still be transmitted and available for measurement at time occasions not known to the wireless device, e.g., when the neighbour cell timing is not known to the UE, or when the measurements are to be performed in certain patterns (such as restricted measurement patterns for eICIC). Information about when neighboring cells 42 transmit these non-positioning reference signals may be obtained by the measurement gap configuration circuit 54 in much the same way as discussed above with respect to the positioning reference signals 46.

The measurement gap configuration circuit 54 may obtain the information indicating one or more non-serving frequencies f₁, f₂ on which the wireless device 36 is to perform one or more positioning measurements via any number of ways. In some embodiments, for example, the measurement gap configuration circuit 54 receives at least some of the information from the wireless device 36, e.g., via radio interface 52. In one such approach, the circuit 54 receives at least some of the information within a measurement gap request from the wireless device 36. This measurement gap request requests the base station 40-s to configure one or more measurement gaps during which the wireless device 36 is to perform the one or more positioning measurements on the one or more non-serving frequencies f₁, f₂. Responsive to the request, the base station 40-s configures the requested measurement gaps as described above and responds with information identifying when those gaps have been configured to occur. In LTE embodiments, the device 36 sends the request to the base station 40-s, and the base station 40-s responds, using a higher layer signaling protocol, e.g., Radio Resource Control (RRC).

In another approach, the measurement gap configuration circuit 54 receives the measurement gap request from the wireless device 36 and, responsive thereto, sends a request to the device 36 for at least some of the non-serving frequency information. Thus, rather than the wireless device 36 proactively sending the base station 40-s the information within the measurement gap request, the device 36 waits until the base station 40-s actually solicits the information. The base station's request for the information may indicate what type of information is being requested, e.g., the non-serving frequencies, neighboring cells identifies, etc. on which the positioning measurements are to be performed. And, like the previous approach, the base station's request and the device's response may be transmitted using a higher layer signaling protocol.

In other embodiments, the measurement gap configuration circuit 54 receives at least some of the information from the network node 44, e.g., via a network node interface 56. In at least one embodiment, for example, the circuit 54 receives such information from the network node 44 in response to the base station 40-s requesting that information. The base station 40-s may request the information when it receives the measurement gap request from the wireless device 36. The information request may include, among other things, the device's identity, a transaction identity, an identity for a positioning session between the device 36 and the network node 44, the type of positioning measurements to be performed, and the like. The information request may also explicitly identify the device's serving cell 42-s, so that the network node 44 can determine the non-serving frequencies on which the measurements may be performed. Alternatively, the network node 44 may implicitly derive or otherwise acquire the serving cell identity based on, for example, information about the base station 40-s that transmitted the information request or information about how the request was routed to the network node 44.

In at least one other embodiment, the measurement gap configuration circuit 54 receives at least some of the information from the network node 44 without having to request that information, in some cases, for example, the wireless device 36 sends a request to the network node 44 requesting measurement gaps. This measurement gap request may likewise contain, among other things, the device's identity, a transaction identity, an identity for a positioning session between the device 36 and the network node 44, the type of positioning measurements to be performed, and the like. The request may also identify the serving cell 42-s. Regardless, responsive to receiving this request, the network node 44 proactively sends the base station 40-s at least some of the non-serving frequency information that the base station 40-s will ultimately need in configuring the measurement gaps as described above. In other cases, the network node 44 may wait to send this information to the base station 40-s until the node 44 sends the wireless device 36 assistance data for performing the one or more positioning measurements. In any of these cases, the information may be sent via LPPa or LPPe in LTE embodiments.

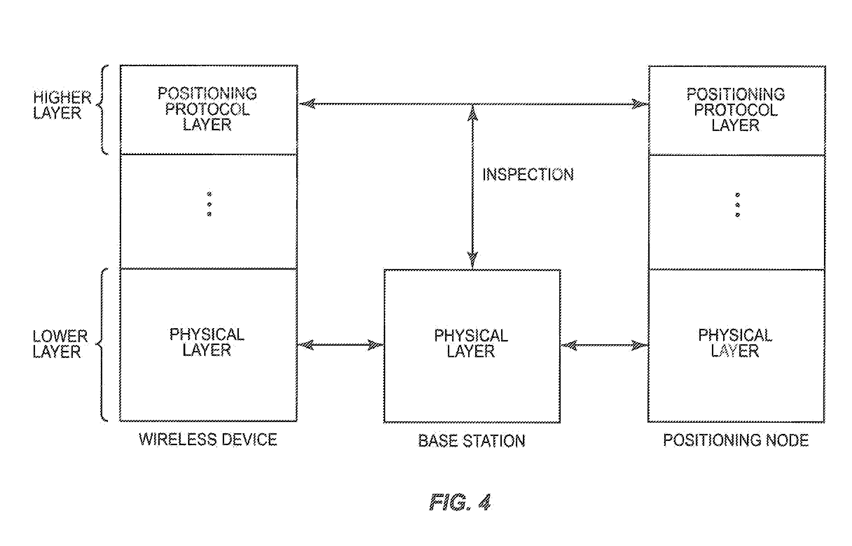

While in the above embodiments the measurement gap configuration circuit 54 received information from the wireless device 36 or network node 44 via explicit control signaling, in other embodiments the circuit 54 receives such information by inspecting or otherwise "sniffing" higher layer communications transmitted between the device 36 and network node 44. Figure 4 illustrates these so-called "cross layer" embodiments in more detail. As shown in Figure 4, the base station 40-s, wireless device 36, and network node 44 each implement a protocol stack. The wireless device 36 and network node 44 communicate at a higher layer of their protocol stacks called a positioning protocol layer (such as LPP in LTE embodiments). The base station 40-s communicates with each of the wireless device 36 and the network node 44 at a lower layer of the protocol stacks, referred to generally as a physical layer. Through these lower layer communication, the base station 40-s transparently forwards or relays the higher layer communications between the wireless device 36 and the network node 44.

Nonetheless, according to advantageous embodiments herein, the base station 40-s inspects the higher layer communications as it is forwarding them between the wireless device 36 and network node 44. These higher layer communications may contain, for instance, assistance data being transmitted from the network node 44 to the wireless device 36. Accordingly, through cross-layer inspection of this assistance data, the base station 40-s obtains or extracts at least some of the non-serving frequency information.

In yet other embodiments, the measurement gap configuration circuit 54 receives at least some of the information from other network nodes, e.g., an operation and maintenance node, or a self organizing network node. In still other embodiments, the circuit 54 receives at least some of the information from a database stored internally at the base station 40-s in memory 58, or stored externally in another node.

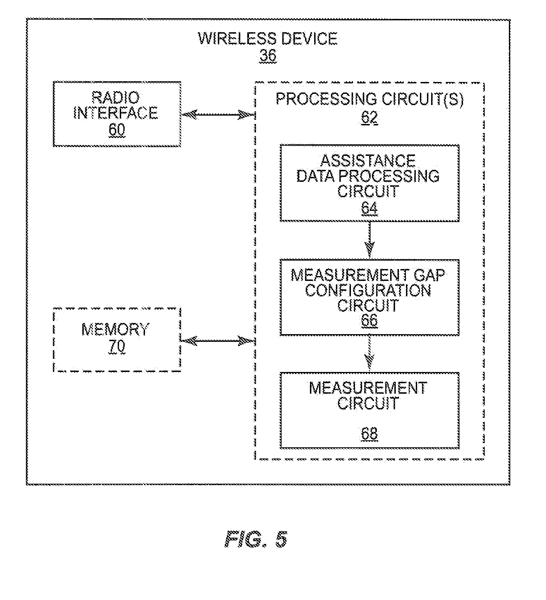

Figure 5 now illustrates additional details of the wireless device 36 in accordance with the above described embodiments. As shown in Figure 5, the device 36 includes a radio interface 60 and one or more processing circuits 62. The radio interface is configured to to wirelessly communicate with the base station 40-s over radio resources. The one or more processing circuits 62 include an assistance data processing circuit 64, a measurement gap configuration circuit 66, and a measurement circuit 68.

The assistance data processing circuit 64 is configured to receive assistance data from the network node 44, via the radio interface 60. The assistance data processing circuit 64 is further configured to interpret or otherwise recognize the assistance data as being associated with one or more positioning measurements for which the device 36 is to request measurement gaps; that is, positioning measurements that are to be performed on one or more non-serving frequencies f₁, f₂. In this regard, the assistance data includes information that indicates such non-serving frequencies.

The measurement gap configuration circuit 66 is configured to transmit a measurement gap request to the base station 40-s, via the radio interface 60. This measurement gap request requests the base station 40-s to configure one or more measurement gaps during which the wireless device 36 is to perform the one or more positioning measurements. In conjunction with transmitting the measurement gap request, the measurement gap configuration circuit 66 is configured to also transmit information to the base station 40-s that indicates the one or more non-serving frequencies f₁, f₂ on which the wireless device 36 is to perform the one or more positioning measurements. In some embodiments, for example, the measurement gap configuration circuit 66 includes such information in the measurement gap request itself.

Note that the measurement gap configuration circuit 66 may receive assistance data related to this information from a network node, so that the circuit 66 can in turn send such information to the base station 40-s in conjunction with a measurement gap request. However, in some embodiments, the measurement gap configuration circuit 66 receives assistance data associated with a greater number inter-frequencies than that for which it requests measurement gaps. In this case, the measurement gap configuration circuit 66 intelligently selects a subset of cells or frequencies for which measurement gaps are to be requested.

For example, some wireless devices 36 (such as those capable of carrier-aggregation) may be able to perform inter-frequency measurements on at least some of the frequencies for which it received assistance data without having to request measurement gaps. In this case, the device's measurement gap configuration circuit 66 is configured to refrain from requesting measurement gaps for those frequencies, and may therefore only request measurement gaps for a subset of frequencies. As another example, if measurements on all frequencies for which the device 36 received assistance data are not possible, the measurement gap configuration circuit 66 may select and request measurement gaps for only a subset of those frequencies. Additionally or alternatively, the measurement gap configuration circuit 66 may select frequencies on which PRS occasions may be covered by the same gap pattern, etc.

Regardless, as in embodiments described previously, the information transmitted to the base station 40-s may further identify at least one neighbor cell 42 on which the measurements will be performed, the periods of time in which those cells 42 transmit positioning reference signals 46, or the like.

The measurement gap configuration circuit 66 is also configured to receive a response from the base station 40-s. Such response includes information identifying when the one or more measurement gaps have been configured to occur. Correspondingly, the measurement circuit 68 is configured to perform the one or more positioning measurements on the one or more non-serving frequencies f₁, f₂ during the one or more configured measurement gaps indicated by the response, using the received assistance data. In doing so, the measurement circuit 68 is configured to perform (i.e., time) at least one positioning measurement by measuring a positioning reference signal 46-1, 46-2 transmitted from a neighboring cell 42-1, 42-2 during a corresponding measurement gap using a corresponding non-serving frequency f₁, f₂.

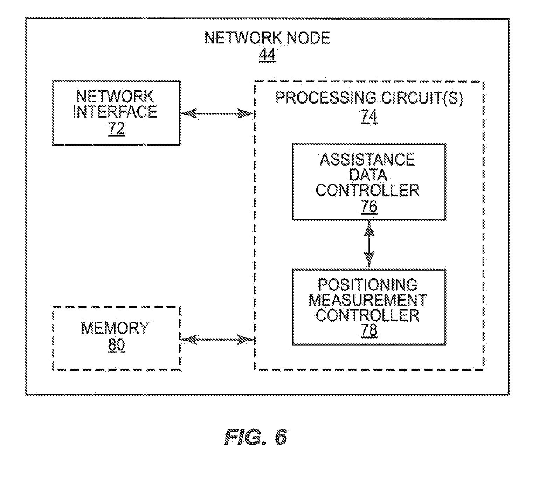

Figure 6 illustrates additional details of a network node 44 (e.g., a positioning node) in accordance with the above described embodiments. As shown in Figure 6, the network node 44 includes a network interface 72 and one or more processing circuits 74. The network interface 72 is configured to communicatively couple the network node 44 to the base station 40-s (e.g., via lower layer protocols) and the wireless device 36 (e.g., via higher layer protocols). The one or more processing circuits 74 include an assistance data controller 76 and a positioning measurement controller 78.

The assistance data controller 76 is configured to obtain assistance data for assisting the wireless device 36 to perform one or more positioning measurements. The assistance data controller 76 may do so, for example, responsive to receiving a request from the wireless device 36 for its position. Regardless, the obtained assistance data includes information that indicates one or more non-serving frequencies f₁, f₂ on which the wireless device 36 is to perform the one or more positioning measurements. Having obtained this assistance data, the assistance data controller 76 is configured to send the assistance data to the wireless device 36 and a request that the wireless device 36 perform the one or more positioning measurements. Notably, the assistance data controller 76 is further configured to send to the device's serving base station 40-s the information indicating the one or more non-serving frequencies f₁, f₂ on which the wireless device 36 is to perform the one or more positioning measurements. This way, the base station 40-s will be able to configure measurement gaps for the device 36 as described above.

Note that in at least some embodiments the network node 44 intelligently requests the wireless device 36 to perform positioning measurements on non-serving frequencies based on the serving base station's ability to configure measurement gaps for such measurements. By requesting the wireless device 36 to perform positioning measurements based on the base station's ability to accommodate those measurements with measurement gaps, the network node 44 advantageously mitigates the possibility that requested positioning measurements will fail.

Specifically, the positioning measurement controller 78 in these embodiments is configured to obtain information that indicates whether or not the base station 40-s is capable of configuring one or more measurement gaps during which the wireless device 36 can perform one or more positioning measurements on one or more non-serving frequencies f₁, f₂. If the base station 40-s is capable, the positioning measurement controller 78 sends a request to the wireless device 36 requesting that the wireless device 36 perform the one or more positioning measurements with respect to at least one neighboring cell 42-1, 42-2. Otherwise if the base station 40-s is not capable, the positioning measurement controller 78 either refrains from sending such a request, or determines different non-serving frequencies on which to perform positioning measurements.

While the above description has generally referred to the positioning measurements as being performed on one or more non-serving frequencies, those skilled in the art will appreciate that such positioning measurements may encompass more than just those measurements conventionally referred to as "inter-frequency" measurements. Indeed, inter-frequency measurements typically connote measurements performed on signals that are transmitted at a frequency different than a serving frequency, but with the same radio access technology (RAT) as the serving RAT and/or within the same frequency band as the serving band. Of course, different RATs and different frequency bands operate on different frequencies, meaning that positioning measurements performed on one or more non-serving frequencies encompass not only inter-frequency measurements, but also inter-RAT and inter-band measurements.

In this regard, note that the information obtained by the wireless device 36 may actually indicate one or more non-serving RATs on which the wireless device 36 is to perform the one or more positioning measurements. More particularly, the wireless device 36 may receive such information via at least one of a higher-layer protocol extension (e.g., LPPe) and user plane communications (e.g., SUPL). Moreover, the wireless device 36 may receive such information in conjunction with a request for the wireless device 36 to use the information to perform the positioning measurements on one or more neighboring cells 42-1, 42-2 that implement the one or more non-serving RATs.

Those skilled in the art will also appreciate that, in various ones of the embodiments above, different neighboring cells 42-1, 42-3 are configured to transmit positioning reference signals 46-1, 46-2 during different time periods (in the sense that, although the periods may overlap, they are not identical), despite transmitting those signals 46-1, 46-2 using the same non-serving frequency. In other embodiments, the wireless communication system 30 includes three or more neighboring cells 42 that transmit positioning reference signals 46 on different non-serving frequencies. Regardless, in these embodiments, the base station 40-s discussed above advantageously receives explicit assistance data related to the non-serving frequencies, since the base station 40-s could not indirectly deduce or otherwise derive such data.

Those skilled in the art will further appreciate that the wireless device 36 described herein may be any wireless node capable of performing positioning measurements on positioning reference signals 46. In this regard, the device 36 may be a mobile terminal (e.g., a smart phone, a personal digital assistant, a laptop, etc.), a sensor, a mobile relay, or even a small base station or fixed relay that is being positioned, e.g., at setup. In LTE embodiments, for instance, the device 36 comprises any LCS target.

Moreover, the device 36 need not necessarily require measurement gaps in order to perform positioning measurements on non-serving frequencies. Indeed, standardized operation of the device 36 may dictate that measurement gaps be configured for such positioning measurements, even if the device 36 is technically capable of performing the measurements without them. One such device 36 may be, for instance, a device capable of carrier aggregation.

Further, those skilled in the art will appreciate that the various "circuits" described may refer to a combination of analog and digital circuits, and/or one or more processors configured with software stored in memory 58, 70, 80 and/or firmware stored in memory 58, 70, 80 that, when executed by the one or more processors, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Still further, the above embodiments have not been described in the context of any particular type of wireless communication system (i.e., RAT). In this regard, no particular communication interface standard is necessary for practicing the present invention. That is, the wireless communication system 30 may be any one of a number of standardized system implementations that configure measurement gaps during which a wireless device 36 can perform positioning measurements on non-serving frequencies.

Nonetheless, as one particular example, the system 30 may implement LTE or LTE-based standards. In this case, the wireless device 36 may comprise a User Equipment (UE), and the base station 40 may comprise an eNodeB. Likewise, the network node 44 may comprise a positioning node that implements a positioning platform. If the platform is implemented in the user plane, the network node 44 is an SLP node, and if the platform is implemented in the control plane, the node 44 is an E-SMLC node. Moreover, signaling of the positioning result between an E-SMLC node and an LCS Client may be transferred via multiple nodes (e.g., via MME and GMLC). Note also that LTE FDD and LTE TDD are considered as different RATs, and two LTE networks are also considered as two different LTE RATs. Finally, positioning reference signals 46 as referred to above comprise Positioning Reference Signals (PRS) in LTE.

An eNodeB according to current LTE standards receives a request for inter-frequency measurement gaps but is not aware of the carrier frequency on which those measurements will be performed. Despite this, the current OTDOA RSTD inter-frequency requirements specify that "there are no measurement gaps overlapping with the PRS subframes in cells belonging to the serving carrier frequency." 3GPP TS 36,133 v.10.1.0 and v.9.6.0, Section 9.1.10.2. This is problematic because the currently standardized measurement gap periodicity is a multiple of 40 ms (40 ms and 80 ms, but only 40 ms may be configured for inter-frequency RSTD, as specified in 3GPP TS 36.133). Moreover, the periodicity of PRS positioning occasions is also a multiple of 40 ms. This means that, in order to comply with the current OTDOA RSTD inter-frequency requirements and avoid overlap of the gaps with the serving cell PRS, PRS positioning occasions on non-serving cells have to be misplaced with respect to the serving cell. This in turn means that PRS positioning occasions are likely to be non-overlapping on any two frequencies in a system.

In a two-frequency system, the serving eNodeB, which configures measurement gaps, knows the serving frequency of the UE and thus knows the other frequency. If on the other frequency all cells are using overlapping PRS positioning occasions, then the eNodeB may deduce when in time measurement gaps for that frequency have to be configured. A problem, however, occurs when PRS occasions are misaligned in some cells on the same frequency or more than two frequencies are used for inter-frequency measurements (e.g. there is at least one cell using PRS on each frequency).

To address this problem, more information (referred to as enhanced measurement gap-related information, or EMGRI) may be provided to or acquired by the eNodeB so that the eNodeB can overlap a configured measurement gap with a PRS positioning occasion on a non-serving frequency measured by the UE. EMGRI indicates the one or more non-serving frequencies on which inter-frequency positioning measurements are to be performed. EMGRI may also include the RAT in which positioning measurements in the requested measurement gaps are to be performed, at least one cell ID for which inter-frequency positioning measurements are to be performed, one or more preferred measurement gap configurations, and/or reference cell identification information from the positioning assistance data. EMGRI may even include additional information, including one or more of offsets (one per inter-frequency cell) between positioning occasions of inter-frequency cells and the reference or serving cell, one or more System Frame Number (SFN) offsets, positioning reference signal (PRS) subframe offset, and/or one or more PRS configurations.

With regard to the EMGRI including at least one cell ID, the EMGRI may include only a single cell ID. This may be the case when all cells are on the same non-serving frequency and/or have the same PRS configuration with PRS positioning occasions aligned among the cells. Any cell ID of any cell on this frequency may be selected, e.g., randomly. Or, this may be the case when if the UE selects only one of a plurality of possible inter-frequencies for performing positioning measurements, and correspondingly selects one cell from the selected frequency. In this regard, the UE may select the inter-frequency that has the largest number of cells transmitting on that frequency. In other embodiments, the EMGRI may include more than one cell ID. This may be the case if more than one cell is selected for a single frequency, or if multiple frequencies are selected.

With regard to the EMGRI including one or more preferred measurement gap configurations, such may be indicated as a preferred measurement gap offset. The eNodeB will still have the final decision about which measurement gap configuration to actually use. In this regard, though, the preference may be used to recommend the configuration that would maximize the number of cells that could be measured within the configured measurement gaps. Such would depend on how the PRS are aligned among the cells and upon the cell frequencies.

With regard to the additional information included in the EMGRI, that information may be a part of the EMGRI, or signaled outside the EMGRI. For example, the additional information may be signalled from the positioning node to the eNodeB via LPPa, or exchanged between eNodeB e.g. via X2 or via O&M.

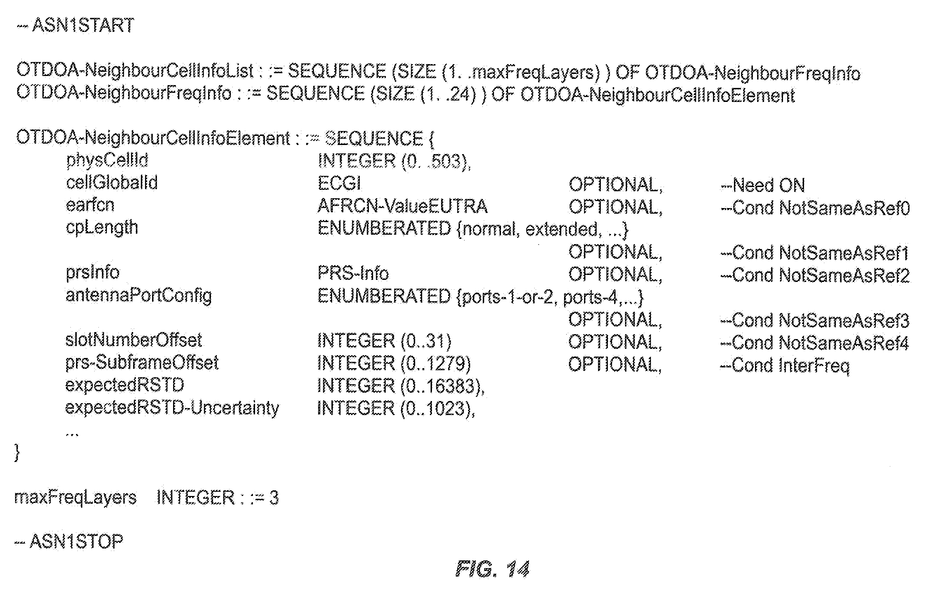

Regardless, with respect to the one or more offsets of this additional information, the offsets may be a subframe offset between the positioning occasions of the inter-frequency cell for which measurement gaps are needed and the reference or serving cell. In another embodiment, the subframe offset is the prs-SubframeOffset, or is derived according the definition of prs-SubframeOffset in 3GPP TS 36.355, where the prs-SubframeOffset is specified in Figure 14.

With regard to the one or more SFN offsets, there may be one SFN offset per inter-frequency cell. Here, the SFN offset is the offset between the SFN 0 of the inter-frequency cell and the SFN 0 of the reference / serving cell.

With regard to the one or more PRS configurations, there may be one configuration per inter-frequency cell. These configurations include those defined in 3GPP TS 36.211. Further, PRS configurations may also be muted according to a pattern. The muting pattern information may provide additional information on whether the configured PRS signals are actually transmitted or not at certain time occasions, so the obtained periods of time during which a neighbor cell transmits its signals intended for positioning measurements may also account for such muting configuration. Alternatively, muting configuration may be not received in an indication message but may be obtained by some other means (e.g., via O&M or X2 with another radio node) but still be accounted when configured the measurement gaps requested for positioning measurements.

The EMGRI may be acquired by the eNodeB in any number of ways. In one example, the eNodeB maintains a database from which the EMGRI is acquired. The database may be in internal or external memory and may comprise neighbor relation information for cells in the area, e.g. which cells are to be likely inter-frequency cells for positioning measurements for a UE served by the current cell associated with the eNodeB. In one embodiment, the same database may be used by the positioning node. In yet another embodiment, the database is obtained by the eNodeB from the positioning node or other network node (e.g. SON or O&M).

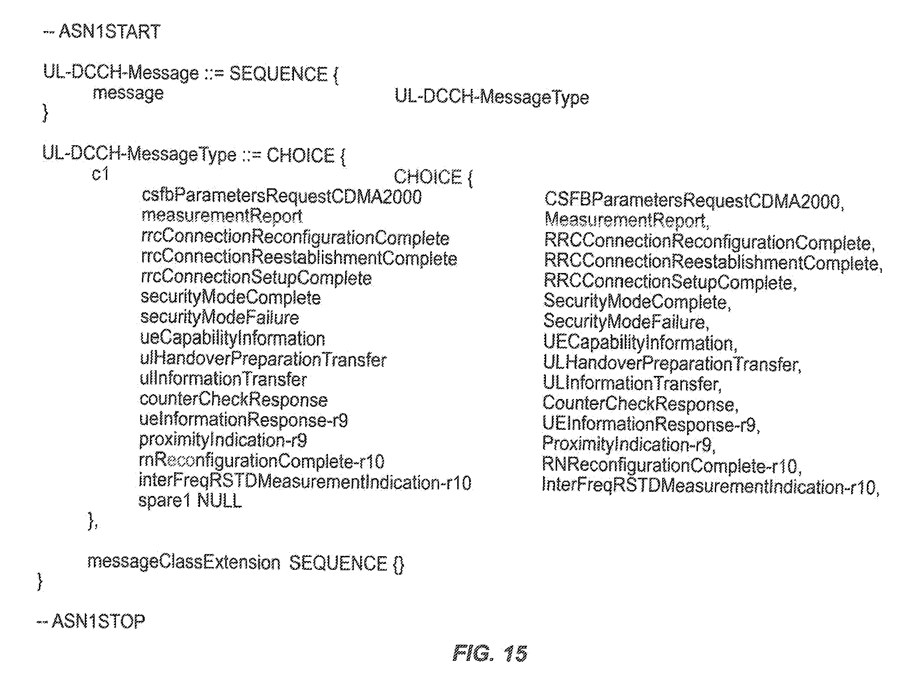

In another example, the eNodeB obtains the EMGRI via RRC signaling. According to one embodiment, the EMGRI may be signaled in an RRC message defined according to 3GPP TS 36.331. The EMGRI may be signalled together with a measurement gap indication. An example RRC message is an UL-DCCH-Message. The UL-DCCH-Message class is the set of RRC messages that may be sent from the UE to the E UTRAN on the uplink DCCH logical channel. See, for example, Figure 15.

As shown in Figure 15, interFreqRSTDMeasurementIndication-r10 is a new element introduced in the UL-DCCH-MessageType for the EMGRI. Indeed, in one embodiment, EMGRI is signaled within the new element InterFreqRSTDMeasurementIndication-r10, thus replacing the reserved spare7 element.

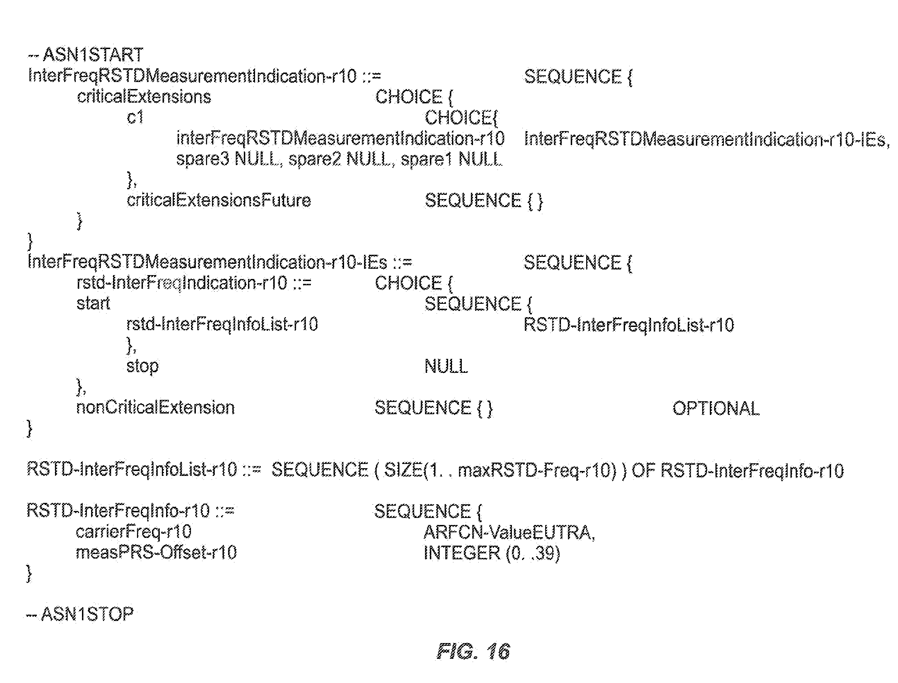

Alternatively, EMGRI is signaled within another element that will contain the measurement gap indication or start/stop indicators. See, for example, Figure 16.

Furthermore, the eNodeB when receiving EMGRI, e.g. cell ID(s), may further request (e.g. from a positioning node or another network node or the radio node associated with the cell(s)) additional information that enables the eNodeB to correctly configure measurement gaps, e.g. PRS configuration of at least one cell for which PRS configuration is not known to the eNodeB.

According to yet another example, the eNodeB uses cross layer communication to inspect higher layer protocol packets for the EGMRI. In this embodiment, cross layer communication is used by the eNB to sniff the information sent in LPP, in order to acquire the EMGRI. Specifically, LPP is used for communication between the UE and the E-SMLC. LPP passes transparently over the eNB, and contains assistance data which in turn carries information such as carrier frequency of the inter-frequency RSTD measurement, PRS information etc. Since all assistance data in LPP goes through the eNB, the eNodeB has the means to access higher layer information by inspecting the structure of the transported LPP packets. Once EMGRI information is captured, it can be used as an input for determining the parameters related to the inter-frequency positioning measurements e.g. carrier frequency, measurement gap offset etc. Hence the eNB can configure the measurement gap in an efficient manner. For example, the eNB can configure the measurement gap such that UE does not miss any PRS occasion. The eNB may also be able to ensure that the maximum number of positioning subframes is included in the measurement gap. This will in turn improve the measurement performance of the positioning measurements.

In the future, assistance data may be enhanced with new parameters. This will also widen the scope of EMGRI i.e. new parameters. Notably, the cross layer communication method above can nonetheless ensure that these new parameters are also easily acquired by the eNB by sniffing the LPP.

Of course, in some instances the eNodeB may not be able to align all measurement gaps with PRS signals. In known approaches, if configured measurement gaps do not overlap with PRS positioning occasions, the inter-frequency measurements are likely to fail. Embodiments herein advantageously recognize that, even though PRS have been specifically designed for positioning measurements and in genera! are characterized by better signal quality than other reference signals, the LTE standard does not mandate using PRS. The embodiments therefore employ other reference signals, e.g. cell-specific reference signals (CRS), for positioning measurements.

Specifically, to prevent measurement failure, when the UE requests measurement gaps for RSTD measurements and the network configures the gaps, the UE performs the measurements on non-serving frequencies/RATs on signals that are different from PRS. The signals may be any signals that are available in the gaps. Either the network can ensure that the signals are available in the gaps, or the signals are transmitted more often than PRS (e.g, the periodicity of these signals is at most as long as the measurement gap length).

Some examples of non-PRS signals in LTE are synchronization signals, cell-specific reference signals (CRS), UE-specific reference signals, or any other reference or physical signals. In the embodiment where the UE performs measurements on UE specific reference signals, these signals may be configured upon receiving such an indication e.g. in one or more of the requested cell (the requested cell identification may be supplied with EMGRI).

Example non-PRS signals in a non-LTE RAT are pilot signals in UMTS or CDMA, any physical signals, etc. indeed, in one embodiment, a radio base station associated with the serving cell of the UE supports multiple RATs, e.g. multi-standard radio (MSR) base stations supporting GSM, UMTS and LTE. In this case, if an MSR base station receives an indication for measurement gaps for inter-frequency positioning measurements, it may also be aware of the signals transmitted by the same base station in different RATs, and possibly the signals transmitted by other BSs in the same RAT (e.g. in a synchronous network, such as CDMA or GSM). Thus, the base station may use this information when configuring measurement gaps to ensure that the measurement gaps cover the signals to be measured. Note that also any non-MSR radio node may exploit the fact the network on a certain frequency is synchronous or frame-aligned or subframe-aligned, while configuring measurement gaps.

Finally, note that LTE embodiments herein configure and use measurement gaps for measurements beyond those covered by 3GPP TS 36.133. More particularly, in some instances, a multi-frequency situation occurs. The current standard describes two inter-frequency situations, as described in Section 1.1.4.4, covering only cells in the corresponding frequencies received in the OTDOA assistance data. However, with LPPe or user plane positioning protocol (SUPL), assistance data may be further extended to include more cells, which may be on the same frequency as the serving cell or on a different frequency, on the same RAT or a different RAT (e.g. GSM, WCDMA, or CDMA).

According to the current LTE specification, there are no requirements for measurements that involve such cells and there is no standardized way to inform eNodeB about the measurement gaps for such cells. With the measurement gap activation introduced in the standard, the UE has a possibility to request measurement gaps. In one embodiment, the UE requests measurement gaps via RRC using an RRC message in order to enable positioning measurements on cells the assistance data for which is received via LPPe or any user plane protocol (e.g. SUPL).

Advantageous embodiments herein address the deficiencies of the current LTE specification with a UE configured to perform the following method. The method includes in step 1 the UE receiving assistance data not in LPP otdoa-RequestAssistanceData. or assistance data not covered by the requirements in 3GPP TS 36.133. The UE may receive such assistance data via LPPe or any user plane protocol (e.g. SUPL). Moreover, the assistance data may comprise assistance data for timing measurements in LTE or other RAT e.g. CDMA, GSM, or WCDMA.

The method continues with the UE interpreting the requested measurements as measurements for which the UE is allowed to request measurement gaps via RRC. In this regard, the method includes sending a measurement gap request via RRC.

Correspondingly, the method follows with receiving a measurement gap configuration from the network and configuring measurement gaps accordingly. Finally, the method entails performing measurements using the assistance data received in step 1 and the configured measurement gaps.

In another embodiment, in addition to Step 1 the UE also receives assistance data in LPP otdoa-RequestAssistanceData, where the requested measurements in the assistance data in LPP otdoa-RequestAssistanceData are interpreted as inter-frequency measurements. In yet another embodiment, the assistance data in LPP otdoa-RequestAssistanceData are artificially configured to simulate inter-frequency measurements. Further, when the eNodeB receives the request for measurement gaps, it by default configures measurement gaps to enable measurements for the assistance data received in the described above Step 1. In a specific example, the measurement gap configuration is optimized for measurements in another RAT, e.g. CDMA or GSM. In the next embodiment, the UE may also perform measurements using the configured measurement gaps and for the assistance data received in LPP otdoa-RequestAssistanceData (in addition to those for the assistance data received in Step 1).

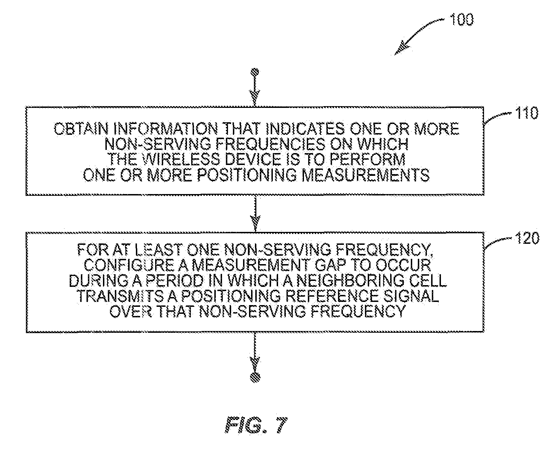

In view of the above described variations and modifications, those skilled in the art will appreciate that a base station 40-s herein generally performs the method 100 illustrated in Figure 7. As shown in Figure 7, the method 100 includes obtaining information that indicates one or more non-serving frequencies f₁, f₂ on which the wireless device 36 is to perform one or more positioning measurements (Block 110). The method then includes, for at least one non-serving frequency f₁, f₂ indicated by the information, configuring a measurement gap (during which the wireless device 36 is to perform a corresponding positioning measurement) to occur during a period of time in which a neighboring cell 42-1, 42-2 transmits a positioning reference signal 46-1, 46-2 over that non-serving frequency f₁, f₂ (Block 120).

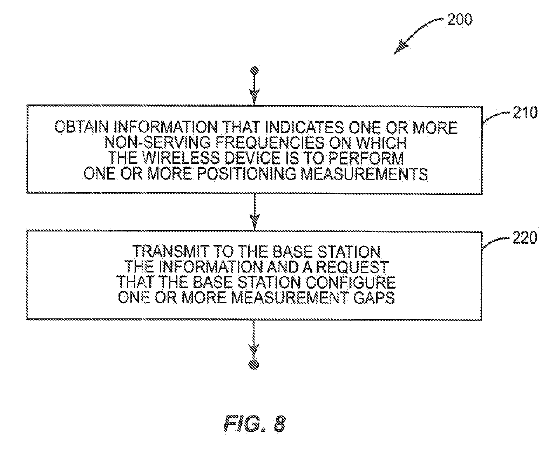

Likewise, those skilled in the art will appreciate that a mobile terminal 36 herein generally performs the method 200 illustrated in Figure 8. As shown in Figure 8, the method 200 includes obtaining information that indicates one or more non-serving frequencies f₁, f₂ on which the wireless device 36 is to perform one or more positioning measurements (Block 210). The method then includes transmitting to the base station 40-s the information and a request for the base station 40-s to configure one or more measurement gaps during which the wireless device 36 is to perform the one or more positioning measurements (Block 220).

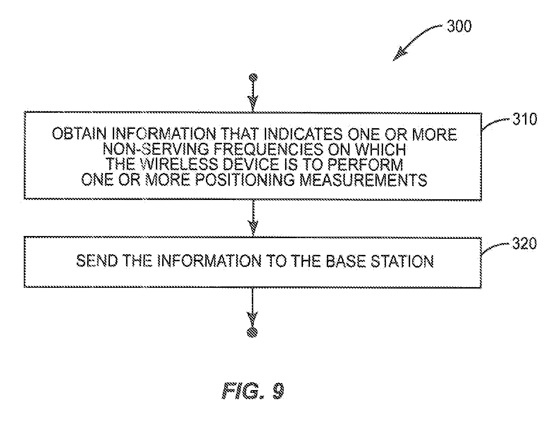

Furthermore, those skilled in the art will appreciate that a network node 44 herein generally performs the method 300 illustrated in Figure 9. As shown in Figure 9, the method 300 includes obtaining information that indicates one or more non-serving frequencies f₁, f₂ on which the wireless device 36 is to perform one or more positioning measurements (Block 310), and then sending the obtained information to the base station 40-s (Block 320).

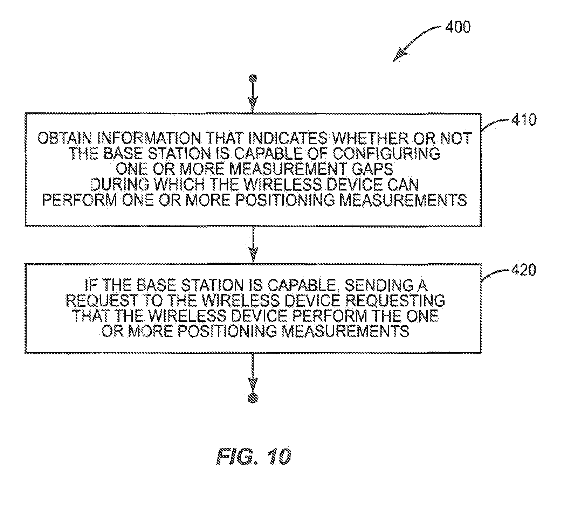

Alternatively or additionally, the network node 44 may generally perform the method 400 illustrated in Figure 10. As shown in Figure 10, the method 400 includes obtaining information that indicates whether or not the base station 40-s is capable of configuring one or more measurement gaps during which the wireless device 36 can perform one or more positioning measurements on one or more non-serving frequencies f₁, f₂ (Block 410). Then, if the base station 40-s is capable of configuring the one or more measurement gaps, the method entails sending a request to the wireless device 36 requesting that the wireless device 36 perform the one or more positioning measurements with respect to at least one neighboring cell 42-1, 42-2 (Block 420). Otherwise, if the base station 40-s is not capable, the method may entail refraining from sending such request to the wireless device 36.

Thus, those skilled in the art will recognize that the present invention may be carried out in other ways than those specifically set forth herein without departing from the scope of the invention, which is defined by the appending claims.

## Claims

1. A method (100)
implemented by a base station (40-s) configured to serve a wireless device (36) in a serving cell (42-s) of a wireless communication system (30) on a serving frequency (fₛ), the method comprises:
obtaining (110) information that indicates one or more non-serving frequencies (f₁, f₂) on which the wireless device (36) is to perform one or more positioning measurements that are to be used for determining the wireless device's geographic position; and
for at least one non-serving frequency (f₁, f₂) indicated by the information, configuring (120) a measurement gap during which the wireless device (36) is to perform a corresponding positioning measurement to occur during a period of time in which a neighboring cell (42-1, 42-2) transmits a positioning reference signal (46-1, 46-2) over that non-serving frequency (f₁, f₂), and **characterized in that**: said obtaining comprises receiving at least some of the information within a request from the wireless device (36) requesting that the base station (40-s) configures one or more measurement gaps during which the wireless device (36) is to perform the one or more positioning measurements on the one or more non-serving frequencies (f₁, f₂).

2. The method according to any of claims 1, wherein said obtaining comprises receiving at least some of the information via control signaling from a positioning node (44) of the wireless communication system (30).

3. The method according to claim 2, wherein said control signaling is received from the positioning node (44) using a Long Term Evolution, LTE, Positioning Protocol, LPP, Annex, or using an LPP extension.

4. The method according to any of claims 1-3, wherein said obtaining comprises obtaining at least some of the information by inspecting higher layer communications transmitted between the wireless device (36) and a positioning node (44) of the wireless communication system (30).

5. The method according to claim 4, wherein said higher layer communications are transmitting between the wireless device (36) and the positioning node (44) using an LPP.

6. The method according to any of claims 1-5, further **characterized by**, for at least one other non-serving frequency indicated by the information, configuring a measurement gap during which the wireless device (36) is to perform a corresponding positioning measurement to occur during a period of time in which a neighboring cell transmits a signal other than a positioning reference signal over that non-serving frequency.

7. A method (200) implemented by a wireless device (36) in a wireless communication system (30), the wireless device (36) served in a serving cell (42-s) by a base station (40-s) on a serving frequency (fₛ), the method comprises:
obtaining (210) information that indicates one or more non-serving frequencies (f₁, f₂) on which the wireless device (36) is to perform one or more positioning measurements that are to be used for determining the wireless device's geographic position; and **characterized by**:
transmitting (220) to the base station (40-s) the information and a request for the base station (40-s) to configure one or more measurement gaps during which the wireless device (36) is to perform the one or more positioning measurements, wherein the one or more measurement gaps is to occur during a period of time in which a neighboring cell (42-1, 42-2) transmits a positioning reference signal (46-1, 46-2) over the one or more non-serving frequency (f₁, f₂), wherein said transmitting comprises including the obtained information in the request.

8. The method according to claim 7, wherein the serving cell (42-s) implements a serving radio access technology, RAT, wherein said obtaining comprises receiving, via at least one of a higher-layer protocol extension and user plane communications, said information in conjunction with a request for the wireless device (36) to use said information to perform said positioning measurements on one or more neighboring cells (42-1, 42-2) that implement one or more non-serving RATs.

9. The method according to any of claims 7-8, further comprising:
receiving a response from the base station (40-s) including information identifying when the one or more measurement gaps have been configured to occur; and
performing the one or more positioning measurements on the one or more non-serving frequencies (f₁, f₂) during the one or more measurement gaps, performing at least one positioning measurement by measuring a positioning reference signal (46-1, 46-2) transmitted from a neighboring cell (42-1, 42-2) during a corresponding measurement gap using a corresponding non-serving frequency (f₁, f₂).

10. A base station (40-s) configured to serve a wireless device (36) in a serving cell (42-s) of a wireless communication system (30) on a serving frequency (fₛ), the base station (40-s) **characterized by** a measurement gap configuration circuit configured to perform the method of any of claims 1-6.

11. A wireless device (36) configured to be served in a serving cell (42-s) of a wireless communication system (30) by a base station (40-s) on a serving frequency (fₛ), the wireless device (36) **characterized by** a radio interface and one or more processing circuits collectively configured to perform the method of any of claims 7-9.

## Patentansprüche

1. Verfahren (100), das von einer Basisstation (40-s) implementiert wird, die so ausgelegt ist, dass sie eine drahtlose Vorrichtung (36) in einer versorgenden Zelle (42-s) eines drahtlosen Kommunikationssystems (30) auf einer versorgenden Frequenz (fₛ) versorgt, wobei das Verfahren umfasst:
Einholen (110) von Informationen, die eine oder mehrere nichtversorgende Frequenzen (f₁, f₂) angeben, auf welchen die drahtlose Vorrichtung (26) eine oder mehrere Positionsbestimmungsmessungen vornehmen soll, die zum Bestimmen der geografischen Position der drahtlosen Vorrichtung verwendet werden sollen;
derartiges Konfigurieren (120) für mindestens eine nichtversorgende Frequenz (f₁, f₂), die durch die Informationen angegeben wird, einer Messlücke, während der die drahtlose Vorrichtung (36) eine entsprechende Positionsbestimmungsmessung vornehmen soll, dass sie während einer Zeitdauer auftritt, in welcher eine Nachbarzelle (42-1, 42-2) ein Positionsbestimmungsreferenzsignal (46-1, 46-2) über diese nichtversorgenden Frequenz (f₁, f₂) sendet, und **dadurch gekennzeichnet, dass**: das Einholen ein Empfangen wenigstens einiger der Informationen innerhalb einer Anforderung von der drahtlosen Vorrichtung (36) umfasst, die anfordert, dass die Basisstation (40-s) eine oder mehrere Messlücken konfiguriert, während derer die drahtlose Vorrichtung (36) die eine oder die mehreren Positionsbestimmungsmessungen auf der einen oder den mehreren nichtversorgende Frequenzen (f₁, f₂) vornehmen soll.

2. Verfahren nach Anspruch 1, wobei das Einholen ein Empfangen wenigstens einiger der Informationen über Steuersignalisierung von einem Positionsbestimmungsknoten (44) des drahtlosen Kommunikationssystems (30) umfasst.

3. Verfahren nach Anspruch 2, wobei die Steuersignalisierung vom Positionsknoten (44) unter Verwendung eines LTE (Long Term Evolution)-Positionsbestimmungsprotokoll, LPP,-Anhangs oder unter Verwendung einer LPP-Erweiterung empfangen wird.

4. Verfahren nach einem der Ansprüche 1 - 3, wobei das Einholen ein Einholen wenigstens einiger der Informationen durch Prüfen von Kommunikationen der oberen Schichten umfasst, die zwischen der drahtlosen Vorrichtung (36) und einem Positionsbestimmungsknoten (44) des drahtlosen Kommunikationssystems (30) übertragen werden.

5. Verfahren nach Anspruch 4, wobei die Kommunikationen der oberen Schichten zwischen der drahtlosen Vorrichtung (36) und dem Positionsbestimmungsknoten (44) unter Verwendung eines LPPs übertragen werden.

6. Verfahren nach einem der Ansprüche 1 - 5, ferner **gekennzeichnet durch** derartiges Konfigurieren für mindestens eine andere nichtversorgende Frequenz, die durch die Informationen angegeben wird, einer Messlücke, während der die drahtlose Vorrichtung (36) eine entsprechende Positionsbestimmungsmessung vornehmen soll, dass sie während einer Zeitdauer auftritt, in welcher eine Nachbarzelle ein anderes Signal als ein Positionsbestimmungsreferenzsignal über diese nichtversorgenden Frequenz sendet.

7. Verfahren (200), das von einer drahtlosen Vorrichtung (36) implementiert wird, wobei die drahtlose Vorrichtung (36) in einer versorgenden Zelle (42-s) eines drahtlosen Kommunikationssystems (30) von einer Basisstation (40-s) auf einer versorgenden Frequenz (fₛ) versorgt wird, wobei das Verfahren umfasst:
Einholen (210) von Informationen, die eine oder mehrere nichtversorgende Frequenzen (f₁, f₂) angeben, auf welchen die drahtlose Vorrichtung (36) eine oder mehrere Positionsbestimmungsmessungen vornehmen soll, die zum Bestimmen der geografischen Position der drahtlosen Vorrichtung verwendet werden sollen; und **gekennzeichnet durch**:
Senden (220) an die Basisstation (40-s) der Informationen und einer Anforderung für die Basisstation (40-s) zum Konfigurieren einer oder mehrerer Messlücken, während derer die drahtlose Vorrichtung (36) die eine oder die mehreren Positionsbestimmungsmessungen vornehmen soll, wobei die eine oder die mehreren Messlücken während einer Zeitdauer auftreten sollen, in welcher eine Nachbarzelle (42-1, 42-2) ein Positionsbestimmungsreferenzsignal (46-1, 46-2) über die eine oder die mehreren nichtversorgende Frequenzen (f₁, f₂) sendet, wobei das Senden ein Aufnehmen der eingeholten Informationen in die Anforderung umfasst.

8. Verfahren nach Anspruch 7, wobei die versorgende Zelle (42-s) eine versorgende Funkzugangstechnologie, RAT, implementiert, wobei das Einholen ein Empfangen über mindestens eine von einer Protokollerweiterung der oberen Schichten und Kommunikationen auf Benutzerebene der Informationen in Verbindung mit einer Anforderung für die drahtlose Vorrichtung (36) zum Verwenden der Informationen zum Vornehmen der Positionsbestimmungsmessungen bei einer oder mehreren Nachbarzellen (42-1, 42-2) umfasst, welche eine oder mehrere nichtversorgende RATs implementieren.

9. Verfahren nach einem der Ansprüche 7 - 8, ferner umfassend:
Empfangen einer Antwort von der Basisstation (40-s), welche Informationen umfasst, die identifizieren, für wann das Auftreten der einen oder der mehreren Messlücken konfiguriert ist, und
Vornehmen der einen oder der mehreren Positionsbestimmungsmessungen auf der einen oder den mehreren nichtversorgenden Frequenzen (f₁, f₂) während der einen oder der mehreren Messlücken, wobei mindestens eine Positionsbestimmungsmessung durch Messen eines Positionsbestimmungsreferenzsignals (46-1, 46-2), das von einer Nachbarzelle (42-1, 42-2) gesendet wird, während einer entsprechenden Messlücke unter Verwendung einer entsprechenden nichtversorgenden Frequenz (f₁, f₂) vorgenommen wird.

10. Basisstation (40-s), die so konfiguriert ist, dass sie eine drahtlose Vorrichtung (36) in einer versorgenden Zelle (42-s) eines drahtlosen Kommunikationssystems (30) auf einer versorgenden Frequenz (fₛ) versorgt, wobei die Basisstation (40-s) durch eine Messlückenkonfigurationsschaltung gekennzeichnet ist, die zum Durchführen des Verfahrens nach einem der Ansprüche 1 - 6 konfiguriert ist.

11. Drahtlose Vorrichtung (36), die so konfiguriert ist, dass sie in einer versorgenden Zelle (42-s) eines drahtlosen Kommunikationssystems (30) von einer Basisstation (40-s) auf einer versorgenden Frequenz (fₛ) versorgt wird, wobei die drahtlose Vorrichtung (36) durch eine Funkschnittstelle und eine oder mehrere Verarbeitungsschaltungen gekennzeichnet ist, die gemeinsam zum Durchführen des Verfahrens nach einem der Ansprüche 7 - 9 konfiguriert sind.

## Revendications

1. Procédé (100) mis en oeuvre par une station de base (40-s) configurée pour desservir un dispositif sans fil (36) dans une cellule de desserte (42-s) d'un système de communication sans fil (30) à une fréquence de desserte (fₛ), le procédé comprenant :
l'obtention (110) d'informations indiquant une ou plusieurs fréquences de non-desserte (f₁, f₂) auxquelles le dispositif sans fil (36) doit effectuer une ou plusieurs mesures de positionnement qui doivent être utilisées pour déterminer la position géographique du dispositif sans fil ; et
pour au moins une fréquence de non-desserte (f₁, f₂) indiquée par les informations, la configuration (120) d'un créneau de mesure dans lequel le dispositif sans fil (36) doit effectuer une mesure de positionnement correspondante qui doit survenir pendant une période de temps au cours de laquelle une cellule voisine (42-1, 42-2) transmet un signal de référence de positionnement (46-1, 46-2) à cette fréquence de non-desserte (f₁, f₂), et **caractérisé en ce que** : ladite obtention comprend la réception d'au moins certaines des informations à l'intérieur d'une demande provenant du dispositif sans fil (36) demandant que la station de base (40-s) configure un ou plusieurs créneaux de mesure dans lesquels le dispositif sans fil (36) doit effectuer l'une ou plusieurs mesures de positionnement à l'une ou plusieurs fréquences de non-desserte (f₁, f₂).

2. Procédé selon la revendication 1, dans lequel ladite obtention comprend la réception d'au moins certaines des informations par l'intermédiaire d'une signalisation de commande en provenance d'un noeud de positionnement (44) du système de communication sans fil (30).

3. Procédé selon la revendication 2, dans lequel ladite signalisation de commande est reçue en provenance du noeud de positionnement (44) en utilisant une annexe de protocole de positionnement d'évolution à long terme, LTE, LPP, ou en utilisant une extension LPP.

4. Procédé selon l'une quelconque des revendications 1 - 3, dans lequel ladite obtention comprend l'obtention d'au moins certaines des informations par l'inspection de communications de couche supérieure transmises entre le dispositif sans fil (36) et un noeud de positionnement (44) du système de communication sans fil (30).

5. Procédé selon la revendication 4, dans lequel lesdites communications de couche supérieure sont transmises entre le dispositif sans fil (36) et le noeud de positionnement (44) en utilisant un LPP.

6. Procédé selon l'une quelconque des revendications 1 - 5, **caractérisé en outre par**, pour au moins une autre fréquence de non-desserte indiquée par les informations, la configuration d'un créneau de mesure dans lequel le dispositif sans fil (36) doit effectuer une mesure de positionnement correspondante qui doit survenir pendant une période de temps au cours de laquelle une cellule voisine transmet un signal autre qu'un signal de référence de positionnement à cette fréquence de non-desserte.

7. Procédé (200) mis en oeuvre par un dispositif sans fil (36) dans un système de communication sans fil (30), le dispositif sans fil (36) étant desservi dans une cellule de desserte (42-s) par une station de base (40-s) à une fréquence de desserte (fₛ), le procédé comprenant :
l'obtention (210) d'informations indiquant une ou plusieurs fréquences de non-desserte (f₁, f₂) auxquelles le dispositif sans fil (36) doit effectuer une ou plusieurs mesures de positionnement qui doivent être utilisées pour déterminer le positionnement géographique du dispositif sans fil ; et **caractérisé par** :
la transmission (220), à destination de la station de base (40-s), des informations et d'une demande à la station de base (40-s) de configurer un ou plusieurs créneaux de mesure dans lesquels le dispositif sans fil (36) doit effectuer l'une ou plusieurs mesures de positionnement, dans lequel l'un ou plusieurs créneaux de mesure doit survenir pendant une période de temps au cours de laquelle une cellule voisine (42-1, 42-2) transmet un signal de référence de positionnement (46-1, 46-2) à l'une ou plusieurs fréquences de non-desserte (f₁, f₂), dans lequel ladite transmission comprend l'inclusion des informations obtenues dans la demande.

8. Procédé selon la revendication 7, dans lequel la cellule de desserte (42-s) met en oeuvre une technologie d'accès radio, RAT, de desserte, dans lequel ladite obtention comprend la réception, par l'intermédiaire d'au moins l'une d'une extension de protocole de couche supérieure et de communications de plan d'utilisateur, desdites informations en conjonction avec une demande au dispositif sans fil (36) d'utiliser lesdites informations pour effectuer lesdites mesures de positionnement dans une ou plusieurs cellules voisines (42-1, 42-2) mettant en oeuvre une ou plusieurs RAT de non-desserte.

9. Procédé selon l'une quelconque des revendications 7 - 8, comprenant en outre :
la réception d'une réponse, en provenance de la station de base (40-s) comprenant des informations identifiant quand l'un ou plusieurs créneaux de mesure ont été configurés pour survenir ; et
l'exécution de l'une ou plusieurs mesures de positionnement à l'une ou plusieurs fréquences de non-desserte (f₁, f₂) dans l'un ou plusieurs créneaux de mesure, l'exécution d'au moins une mesure de positionnement par la mesure d'un signal de référence de positionnement (46-1, 46-2) transmis en provenance d'une cellule voisine (42-1, 42-2) dans un créneau de mesure correspondant en utilisant une fréquence de non-desserte (f₁, f₂) correspondante.

10. Station de base (40-s) configurée pour desservir un dispositif sans fil (36) dans une cellule de desserte (42-s) d'un système de communication sans fil (30) à une fréquence de desserte (fₛ), la station de base (40-s) étant **caractérisée par** un circuit de configuration de créneau de mesure configuré pour effectuer le procédé selon l'une quelconque des revendications 1 - 6.

11. Dispositif sans fil (36) configuré pour être desservi dans une cellule de desserte (42-s) d'un système de communication sans fil (30) par une station de base (40-s) à une fréquence de desserte (fₛ), le dispositif sans fil (36) étant **caractérisé par** une interface radio et un ou plusieurs circuits de traitement collectivement configurés pour effectuer le procédé selon l'une quelconque des revendications 7 - 9.
